# EUROPÄISCHE PATENTANMELDUNG

(11) **EP 3 203 265 A1**
(43) Veröffentlichungstag der Anmeldung: **09.08.2017**
(21) Anmeldenummer: 17152444.0
(22) Anmeldetag: 20.01.2017
(51) Int. Cl.: G01S 17/42, G01S 7/481, G01S 17/93

(54) **OPTISCHE MESSVORRICHTUNG EINES FAHRZEUGS, FAHRERASSISTENZEINRICHTUNG UND FAHRZEUG MIT WENIGSTENS EINER OPTISCHEN MESSVORRICHTUNG**

(30) Priorität: 22.01.2016 DE 102016101134
(71) Anmelder: Valeo Schalter und Sensoren GmbH, 74321 Bietigheim-Bissingen (DE)
(72) Erfinder: DR. BUSSE, Gunnar, 74321 Bietigheim-Bissingen (DE)

(57) **Zusammenfassung**

Es werden eine optische Messvorrichtung (14) eines Fahrzeugs, eine Fahrerassistenzeinrichtung (12) und ein Fahrzeug mit wenigstens einer optischen Messvorrichtung (14) beschrieben. Die optische Messvorrichtung (14) umfasst wenigstens eine Sende- und Empfangseinrichtung (46) aufweisend wenigstens einen optischen Sender und wenigstens einen optischen Empfänger, welche relativ zueinander so angeordnet sind, dass der wenigstens eine optische Empfänger von dem wenigstens einen Sender ausgestrahlte Sendestrahlen, die von einem in einem Sendestrahlengang des wenigstens einen Senders gegebenenfalls vorhandenen Objekt (18) oder Hindernis zurückgestrahlt werden, empfangen kann. Wenigstens eine Sende- und Empfangseinrichtung (46) ist mit wenigstens einer Schwenkeinrichtung (24, 26, 38, 40, 42, 44) bezüglich einer Sendestrahlachse (48) ihres Sendestrahlengangs um eine gedachte Schwenkachse (42) schwenkbar verbunden zum Abtasten eines Sichtfeldes (62) mit den Sendestrahlen.

## Beschreibung

### Technisches Gebiet

Die Erfindung betrifft eine optische Messvorrichtung eines Fahrzeugs, mit wenigstens einer Sende- und Empfangseinrichtung aufweisend wenigstens einen optischen Sender und wenigstens einen optischen Empfänger, welche relativ zueinander so angeordnet sind, dass der wenigstens eine optische Empfänger von dem wenigstens einen Sender ausgestrahlte Sendestrahlen, die von einem in einem Sendestrahlengang des wenigstens einen Senders gegebenenfalls vorhandenen Objekt oder Hindernis zurückgestrahlt werden, empfangen kann.

Ferner betrifft die Erfindung eine Fahrerassistenzeinrichtung eines Fahrzeugs mit wenigstens einer optischen Messvorrichtung, wobei die optische Messvorrichtung wenigstens eine Sende- und Empfangseinrichtung umfasst, die wenigstens einen optischen Sender und wenigstens einen optischen Empfänger aufweist, welche relativ zueinander so angeordnet sind, dass der wenigstens eine optische Empfänger von dem wenigstens einen Sender ausgestrahlte Sendestrahlen, die von einem in einem Sendestrahlengang des wenigstens einen Senders gegebenenfalls vorhandenen Objekt oder Hindernis zurückgestrahlt werden, empfangen kann.

Außerdem betrifft die Erfindung ein Fahrzeug mit wenigstens einer optischen Messvorrichtung, insbesondere einer Fahrerassistenzeinrichtung, wobei die optische Messvorrichtung wenigstens eine Sende- und Empfangseinrichtung umfasst, die wenigstens einen optischen Sender und wenigstens einen optischen Empfänger aufweist, welche relativ zueinander so angeordnet sind, dass der wenigstens eine optische Empfänger von dem wenigstens einen Sender ausgestrahlte Sendestrahlen, die von einem in einem Sendestrahlengang des wenigstens einen Senders gegebenenfalls vorhandenen Objekt oder Hindernis zurückgestrahlt werden, empfangen kann.

### Stand der Technik

Aus der DE 10 2011 107 594 A1 ist eine optische Messvorrichtung für ein Fahrzeug mit zumindest einem optischen Sender, zumindest einem optischen Empfänger und einer Umlenkspiegelanordnung mit zumindest einem Umlenkspiegel bekannt. Die Messvorrichtung weist einen Träger auf, an dem eine erste Justagevorrichtung ausgebildet ist, durch welche eine im Empfangsstrahlengang angeordnete Empfangslinse der Messvorrichtung in ihrer Position relativ zum Träger einstellbar ist. Alternativ oder zusätzlich ist an den Träger eine zweite Justagevorrichtung ausgebildet, durch welche ein im Empfangsstrahlengang angeordneter Umlenkspiegel in seiner Position relativ zum Träger einstellbar ist.

Der Erfindung liegt die Aufgabe zugrunde, eine optische Messvorrichtung, eine Fahrerassistenzeinrichtung und ein Fahrzeug der eingangs genannten Art zu gestalten, bei denen die Messvorrichtung möglichst einfach und platzsparend realisiert ist. Ferner soll mit der optischen Messvorrichtung möglichst effizient, insbesondere mit möglichst effizienten Bewegungen von Bauteilen der Messvorrichtung, das Sichtfeld abgetastet werden können.

### Offenbarung der Erfindung

Diese Aufgabe wird erfindungsgemäß dadurch gelöst, dass wenigstens eine Sende- und Empfangseinrichtung mit wenigstens einer Schwenkeinrichtung bezüglich einer Sendestrahlachse ihres Sendestrahlengangs um eine gedachte Schwenkachse schwenkbar verbunden ist zum Abtasten eines Sichtfeldes mit den Sendestrahlen.

Erfindungsgemäß ist die gesamte wenigstens eine Sende- und Empfangseinrichtung um die Schwenkachse schwenkbar oder drehbar in der Art, dass ihre Sendestrahlachse ihres entsprechenden wenigstens einen Senders um die Schwenkachse geschwenkt werden kann. Dabei kann die Sendestrahlachse die Schwenkachse kreuzen oder außerhalb von dieser verlaufen. Durch das Schwenken der Sendestrahlachse überstreicht der Senderstrahl ein entsprechendes Sichtfeld, welches als "Field of view" bezeichnet werden kann. Mit den Sendestrahlen kann ein entsprechender Überwachungsbereich innerhalb des Sichtfelds abgetastet werden.

Die Sendestrahlachse definiert einer Hauptachse oder Mittelachse eines Sendestrahlengangs des Senders außerhalb der entsprechenden Sende- und Empfangseinrichtung. Falls wenigstens eine Sende- und Empfangseinrichtung mehrere Sender mit entsprechend mehreren Sendestrahlgängen aufweist, definiert die Sendestrahlachse eine Hauptachse oder Mittelachse eines Feldes, das durch die Sendestrahlgänge außerhalb der entsprechenden Sende- und Empfangseinrichtung aufgespannt wird.

Die Komponenten der zu der wenigstens einen Sende- und Empfangseinrichtung gehörenden Sender und Empfänger müssen beim Betrieb untereinander nicht notwendigerweise verstellt und/oder bewegt werden. Auch müssen die entsprechenden Strahlengänge innerhalb der wenigstens einen Sende- und Empfangseinrichtung nicht notwendigerweise verändert werden. Auf diese Weise können entsprechende Einrichtungen zum Justieren der Komponenten der Sender und der Empfänger einfacher realisiert werden. Insgesamt kann die Sende- und Empfangseinrichtung und damit die optische Messvorrichtung einfacher, robuster, kleiner, platzsparender und/oder kompakter ausgestaltet werden.

Vorteilhafterweise kann wenigstens eine Sende- und Empfangseinrichtung als so genannter Transceiver bezeichnet werden.

Erfindungsgemäß kann anstelle einer Drehbewegung eine Hin-und-Her-Bewegung einer Sende- und Empfangseinrichtung ohne vollständige Rotation insbesondere eines Spiegels vorgesehen ist.

Im Unterschied zu bekannten optischen Messvorrichtungen mit rotierenden Spiegeln, rotierenden Sender-Lichtquellen, insbesondere Lasern, bei denen nur der Sender rotiert, oder rotierenden Laser-Sende- und Empfangseinrichtungen kann bei der erfindungsgemäßen Anordnung eine Lichtquelle des Senders, insbesondere ein Laser, immer in den gewünschten Zielbereich, also den Überwachungsbereich, zeigen. Eine 360° Rotation und ein daraus resultierend großes Si chtfeld ist erfindungsgemäß nicht erforderlich. Bei der erfindungsgemäßen Messvorrichtung ist lediglich erforderlich, dass die Sendestrahlachse innerhalb eines zu dem gewünschten Sichtfeld passenden Öffnungswinkel geschwenkt wird. Erforderliche Fenster in einem Gehäuse der optischen Messvorrichtung, durch die die Sendestrahlen und die Empfangsstrahlen gesendet beziehungsweise empfangen werden, können bezüglich ihrer Fläche bei der erfindungsgemäßen Messvorrichtung entsprechend kleiner ausgestaltet sein. Ein Makrolonspiegel, insbesondere im Bereich in einer Front eines Fahrzeugs, kann wesentlich schmaler, insbesondere um etwa 60% schmaler, ausgestaltet sein, da nur ein Ausschnitt aus einer 360° Anordnung benötigt wird. Ferner kann ein Gehäuse der Messvorrichtung platzsparender, insbesondere keilförmig, ausgestaltet sein.

Vorteilhafterweise kann die Schwenkachse bezüglich des Fahrzeugs so ausgerichtet sein, dass das Sichtfeld einem möglichst breiten Überwachungsbereich abdecken kann. Vorteilhafterweise kann die Schwenkachse etwa senkrecht zu einer Fahrebene des Fahrzeugs verlaufen. Auf diese Weise kann sich das Sichtfeld parallel zur Fahrebene erstrecken. Die Fahrebene ist die Ebene, auf der das Fahrzeug unter normalen Betriebsbedingungen steht oder sich bewegt. Bei einem Kraftwagen kann die Fahrebene durch die Auflagepunkte der Räder, insbesondere auf der Straßenoberfläche, definiert werden.

Vorteilhafterweise kann die optische Messvorrichtung als sogenannter Laserscanner ausgestaltet sein.

Wenigstens ein optischer Sender kann vorteilhafterweise wenigstens eine Lichtquelle, insbesondere einen Laser, aufweisen, mit dem entsprechende Lichtsignale, insbesondere Lasersignale, als Sendestrahlen ausgesendet werden können. Laserstrahlen können sehr präzise gesteuert und fokussiert werden. Der Laser kann vorteilhafterweise gepulst betrieben werden. Ein im Sichtfeld etwa vorhandenes Objekt oder Hindernis und gegebenenfalls dessen Entfernung zur optischen Messvorrichtung kann nach einem Lichtimpulslaufzeitverfahren bestimmt werden.

Der wenigstens eine Empfänger kann vorteilhafterweise wenigstens einen optischen Sensor oder Detektor, insbesondere eine Fotodiode oder eine insbesondere matrixförmige Fotodioden-Anordnung, aufweisen. Fotodioden sind geeignet, die zurückgestrahlten optischen Strahlen des wenigstens einen Senders zu empfangen und in elektrische Signale umzuwandeln.

Vorteilhafterweise kann wenigstens eine Empfänger und/oder wenigstens ein Sender optische Bauteile, insbesondere Spiegel, Linsen oder dergleichen, aufweisen. So können ein Strahlengang und/oder Querschnitte der Strahlen beeinflusst werden. Insbesondere können die Strahlen mit wenigstens einem optischen Bauteil umgelenkt, gebündelt, fokussiert oder aufgeweitet, werden.

Vorteilhafterweise kann wenigstens ein Empfänger und/oder wenigstens ein Sender wenigstens eine Einrichtung zum Justieren aufweisen.

Vorteilhafterweise kann die Messvorrichtung, insbesondere wenigstens ein Empfänger und/oder wenigstens ein Sender, wenigstens eine insbesondere elektronische Steuerkomponente aufweisen. Mit der wenigstens einen Steuerkomponente können die Funktionen der Messvorrichtung, insbesondere des Senders und/oder des Empfängers, gesteuert und/oder elektrische Signale innerhalb der Messvorrichtung, insbesondere des Senders und/oder des Empfängers, verarbeitet werden.

Die Messvorrichtung kann vorteilhafterweise wenigstens eine Steuereinrichtung aufweisen oder mit dieser verbunden sein. Vorteilhafterweise kann gegebenenfalls wenigstens eine Steuerkomponente der Messvorrichtung mit der wenigstens einen Steuereinrichtung verbunden oder wenigstens teilweise in diese integriert sein. Mit der wenigstens einen Steuereinrichtung können von dem wenigstens einen Empfänger erzeugte, einen Abstand zu einem etwaigen Objekt oder Hindernis charakterisierenden Signale verarbeitet werden. Die Signale können zur Steuerung von anderen Funktionssystemen des Fahrzeugs verwendet werden.

Die optische Messvorrichtung kann vorteilhafterweise Teil einer Fahrerassistenzeinrichtung sein. Die Signale der optischen Messvorrichtung können insbesondere zur Steuerung von Fahrfunktionen und/oder Signalisierungseinrichtungen des Fahrzeugs, insbesondere zur Steuerung der Lenkung, des Bremssystems und/oder des Motors, herangezogen werden.

Bei einer vorteilhaften Ausführungsform können der wenigstens eine Sender und der wenigstens eine Empfänger wenigstens einer Sende- und Empfangseinrichtung relativ zueinander fest justiert sein. Auf diese Weise kann ein Justageaufwand insgesamt verringert werden. Die Justage für die Sende- und Empfangseinrichtung kann bei der Herstellung der wenigstens einen Sende- und Empfangseinrichtung erfolgen. Dabei können die entsprechenden Sender und Empfänger relativ zueinander so eingestellt werden, dass der Empfänger die von dem Sender ausgestrahlten und von einem im Sendestrahlengang angeordneten Objekt zurückgestrahlten Strahlen zumindest innerhalb einer für die Benutzung der Messvorrichtung üblichen Entfernung empfangen kann. Je nach Verwendung der Messvorrichtung kann die übliche Entfernung im Bereich von einigen Zentimetern bis zu einigen hundert Metern betragen. Die wenigstens eine fest vorjustierte Sende- und Empfangseinrichtung kann anschließend mit anderen Komponenten der Messvorrichtung montiert werden. Beim Betrieb der Messvorrichtung kann auf Relativbewegungen zwischen dem Sender und dem Empfänger vorteilhafterweise verzichtet werden.

Vorteilhafterweise kann wenigstens ein Sender so ausgestaltet sein, dass ein Sendestrahlengang direkt am Lichtausgang der Lichtquelle, insbesondere eines Lasers, des Senders axial zur Sendestrahlachse außerhalb der entsprechenden wenigstens einen Sende- und Empfangseinrichtung verläuft. Auf diese Weise können die Sendestrahlen direkt hinter dem Sender in jeder Schwenkposition in das Sichtfeld gerichtet sein. Die Bewegungen des wenigstens einen Senders, die erforderlich sind, um das gewünschte Sichtfeld abzutasten, können so verringert werden.

Bei einer weiteren vorteilhaften Ausführungsform kann die Schwenkeinrichtung wenigstens eine motorische Antriebseinrichtung aufweisen oder mit dieser angetrieben sein zum insbesondere zyklischen Hin-und-her-Schwenken wenigstens einer Sende- und Empfangseinrichtung zwischen zwei Maximalauslenkungen ihrer Sendestrahlachse. Auf diese Weise kann die Sendestrahlachse hin- und hergeschwenkt werden. So können die Sendestrahlen ein flächiges Sichtfeld kontinuierlich abtasten. Durch das zyklische Hin- und Herschwenken kann das Sichtfeld gleichmäßig abgetastet werden. Erfindungsgemäß kann anstelle einer Drehbewegung eine Hin-und-Her-Bewegung einer Sende- und Empfangseinrichtung ohne vollständige Rotation insbesondere eines Spiegels vorgesehen ist.

Vorteilhafterweise können die Maximalauslenkungen der Sendestrahlachse durch die wenigstens eine Schwenkeinrichtung, insbesondere einer Position und/oder Orientierung der Schwenkachse relativ zur Sendestrahlachse und/oder relativ zu einer gedachten Antriebsachse der Antriebseinrichtung und/oder relativ zu einer gedachten Elementachse eines Antriebselements, vorgegeben werden. Auf diese Weise kann ein entsprechend großes Sichtfeld abgetastet und damit ein entsprechend großer Überwachungsbereich überwacht werden. Das Sichtfeld der Messvorrichtung kann mittels der Schwenkeinrichtung einfacher und besser an den gewünschten Überwachungsbereich angepasst werden. Die optische Messvorrichtung kann so insgesamt auch platzsparender aufgebaut werden.

Bei einer weiteren vorteilhaften Ausführungsform kann wenigstens eine Sende- und Empfangseinrichtung fest mit einem Schwenkarm verbunden sein, der um die Schwenkachse schwenkbar sein kann. An dem Schwenkarm kann die wenigstens eine Sende- und Empfangseinrichtung stabil gehalten werden. Wenigstens eine Sende- und Empfangseinrichtung kann im Bereich eines Endes des Schwenkarms befestigt sein, in dessen Nähe auch die Schwenkachse angeordnet sein kann. Mit dem Schwenkarm kann die wenigstens eine Sende- und Empfangseinrichtung einfach und gegebenenfalls gleichmäßig geschwenkt werden. Der Schwenkarm kann über eine geeignete drehbare Verbindung, welche die Schwenkachse aufweist, mit einem entsprechenden Träger für die optischen Messvorrichtung, insbesondere eines Gehäuses, verbunden und dort insbesondere gehäusefest gehalten werden.

An dem Schwenkarm kann wenigstens eine geeignete Antriebseinrichtung einfach angreifen, um den Schwenkarm und damit die Sende- und Empfangseinrichtung zu schwenken.

Der Schwenkarm kann auch als Schubstange ausgestaltet sein.

Bei einer weiteren vorteilhaften Ausführungsform kann wenigstens eine Schwenkeinrichtung ein Antriebselement aufweisen, welches um eine gedachte relativ zur Schwenkachse fixe Drehachse kreisen kann und welches entlang des Schwenkarms verschiebbar an diesem mittels einer Führungseinrichtung geführt sein kann. Das Antriebselement kann eine rotatorische Antriebsbewegung ausführen. Das Antriebselement kann dabei Richtungskomponenten seiner Bewegung quer zur Längsachse des Schwenkarms mittels der Führungseinrichtung an diesen übertragen. Das Antriebselement ist mittels der Führungseinrichtung entlang des Schwenkarms verschiebbar, so dass Richtungskomponenten der Bewegung des Antriebselements in Längsrichtung des Schwenkarms nicht an diesen übertragen werden. Des Weiteren kann der Schwenkarm um eine Elementachse des Antriebselements drehbar sein. Dabei kann der Schwenkarm relativ zum Antriebselement und/oder das Antriebselement gemeinsam mit dem Schwenkarm um die Elementachse drehbar sein. Insgesamt kann so der Schwenkarm mit dem kreisenden Antriebselement um die Schwenkachse geschwenkt werden. Durch das kreisende Antriebselement wird eine Hin- und Her-Bewegung des Schwenkarms erzwungen. Durch die Hin-und-her-Bewegung kann mit den Sendestrahlen das Sichtfeld erzeugt werden.

Die Führungseinrichtung kann vorteilhafterweise eine Führung am Schwenkarm für das Antriebselement aufweisen. Die Führung kann sich insbesondere gerade in Längsrichtung des Schwenkarms erstrecken. Mithilfe der Führung kann das Antriebselement in Längsrichtung verschoben werden und in Querrichtung in der Spur gehalten werden. Vorteilhafterweise kann die Führung wenigstens einen Führungsschlitz, eine Führungsnut und/oder eine Führungsstange oder dergleichen aufweisen, in/an dem das entsprechende Antriebselement entlanggleiten und geführt werden kann.

Die Drehachse und die Elementachse können vorteilhafterweise parallel zueinander verlaufen. Auf diese Weise können Verkantungen bei einem Bewegen der beteiligten Bauteile einfacher vermieden werden.

Die Drehachse ist bezüglich der Schwenkachse fix. Sie kann vorteilhafterweise gehäusefest sein.

Bei einer weiteren vorteilhaften Ausführungsform kann das Antriebselement an einem Antriebsarm oder einer Antriebsscheibe angeordnet sein, welche(r) um die Drehachse rotierend antreibbar ist. Das Antriebselement kann bezüglich der Drehachse exzentrisch angeordnet sein. Eine gedachte Elementachse des Antriebselements kann ein Ende eines gedachten Kurbelarms definieren, dessen anderes Ende durch die Drehachse definiert wird.

Ein Antriebsarm und eine Antriebsscheibe können vorteilhafterweise motorisch, insbesondere mittels einem Elektromotor, insbesondere einem Schrittmotor mit Schrittmotorsteuerung, angetrieben werden.

Ein Antriebsarm kann einfach und platzsparend realisiert werden. Der Antriebsarm kann einerseits, insbesondere in der Nähe eines Endes, in der Drehachse gelagert sein und andererseits, insbesondere in der Nähe des anderen Endes, das Antriebselement aufweisen. Der Antriebsarm kann um die Drehachse rotierend bewegt werden, sodass das Antriebselement kreisend bewegt wird.

Mit einer Antriebsscheibe kann eine gleichmäßige Lagerung und Kraftverteilung bezüglich einer die Drehachse aufweisenden Antriebsachse erfolgen. Die Antriebsscheibe kann vorteilhafterweise koaxial zur Drehachse sein. Auf diese Weise ist eine gleichmäßige Lagerung erreichbar. Das Antriebselement, insbesondere die Elementachse des Antriebselements, kann exzentrisch auf der Antriebsscheibe angeordnet sein.

Bei einer weiteren vorteilhaften Ausführungsform kann die Messvorrichtung wenigstens eine Auslenkungsbestimmungseinrichtung aufweisen, mit der wenigstens eine Größe, die einen Schwenkzustand der wenigstens einen Sende- und Empfangseinrichtung charakterisieren kann, insbesondere ein Maß für eine Auslenkung und/oder eine Schwenkfrequenz und/oder einer Schwenkgeschwindigkeit der wenigstens einen Sende- und Empfangseinrichtung, ermittelt werden kann. Auf diese Weise kann eine Auslenkung der Sendestrahlachse insbesondere in Bezug auf eine Referenzachse der Messvorrichtung, insbesondere eine Scannerachse, ermittelt werden. Damit kann eine Position eines etwaigen Objektes relativ zu der Referenzachse mit der Messvorrichtung erfasst werden. Die Referenzachse kann bezüglich der Messvorrichtung, insbesondere einem Gehäuse der Messvorrichtung, fest definiert sein.

Mit einer Geschwindigkeitsmesseinrichtung kann eine Schwenkgeschwindigkeit des Schwenkarms und/oder eine Rotationsgeschwindigkeit des Antriebselements, insbesondere des Antriebsarms oder der Antriebsscheibe, ermittelt werden. Mit einer Winkelmesseinrichtung kann ein Auslenkwinkel zwischen dem Schwenkarm und der Referenzachse der Messvorrichtung oder ein Auslenkwinkel zwischen einem gedachten Kurbelarm mit dem Antriebselement und einer Referenzachse des Antriebselements ermittelt werden.

Vorteilhafterweise kann wenigstens eine Auslenkungsbestimmungseinrichtung aufseiten eines Antriebselement, insbesondere gegebenenfalls des Antriebsarms oder der Antriebsscheibe, angeordnet sein. Auf diese Weise kann die Auslenkung und/oder Geschwindigkeit und/oder Frequenz des wenigstens einen Antriebselements ermittelt werden.

Vorteilhafterweise kann gegebenenfalls die Antriebsscheibe eine Codierscheibe sein. So kann einfach ein Teil einer Auslenkungsbestimmungseinrichtung gemeinsam mit der Antriebsscheibe realisiert werden.

Aus dem Schwenkzustand der wenigstens einen Sende- und Empfangseinrichtung kann die Richtung der Sendestrahlachse ermittelt und damit die Richtung eines gegebenen Objekts oder eines Hindernisses erfasst werden.

Bei einer weiteren vorteilhaften Ausführungsform können mehrere Sende- und Empfangseinrichtungen mit derselben Schwenkeinrichtung um eine Schwenkachse gemeinsam schwenkbar verbunden sein. Auf diese Weise kann insgesamt das Sichtfeld der Messvorrichtung vergrößert werden. Die Sende- und Empfangseinrichtungen können dabei in Richtung der Schwenkachse betrachtet nebeneinander angeordnet sein. Auf diese Weise können sich die Sichtfelder der Sende- und Empfangseinrichtungen wenigstens teilweise aneinander anschließen. So kann das gesamte Sichtfeld der Messvorrichtung vergrößert werden.

Alternativ oder zusätzlich können mehrere Sende- und Empfangseinrichtungen in der Schwenkachse betrachtet übereinander angeordnet sein. Auf diese Weise kann eine Höhe des gesamten Sichtfeldes der Messvorrichtung in Richtung der Schwenkachse vergrößert werden.

Vorteilhafterweise können mehrere Sende- und Empfangseinrichtungen matrixartig angeordnet sein. Auf diese Weise kann ein Überwachungsbereich im Azimut ermöglicht werden, der größer ist als eine Winkelamplitude der Hin-und-Her-Bewegung der Sende- und Empfangseinrichtungen. Übereinander angeordnete Sende- und Empfangseinrichtungen können einen gewissen Erfassungsbereich in der Elevation mit einer vorgegebenen Auflösung ermöglichen.

Bei einer weiteren vorteilhaften Ausführungsform können jeweilige Sendestrahlachsen von wenigstens zwei Sende- und Empfangseinrichtungen der Messvorrichtung zueinander geneigt sein. Auf diese Weise kann ein Öffnungswinkel eines gesamten Sichtfeldes der Messvorrichtung, dass sich aus den Sichtfeldern der einzelnen Sende- und Empfangseinrichtungen zusammensetzen kann, entsprechend vergrößert werden. Der Öffnungswinkel des gesamten Sichtfeldes der Messvorrichtung kann definiert werden durch die jeweils äußeren Maximalauslenkungen der beiden äußeren Sende- und Empfangseinrichtungen.

Vorteilhafterweise kann die Messvorrichtung drei Sende- und Empfangseinrichtungen aufweisen. Die Neigungswinkel der Sendestrahlachsen zwischen den beiden äußeren Sende- und Empfangseinrichtungen und jeweils der mittleren Sende- und Empfangseinrichtung können etwa so groß sein wie ein maximaler Schwenkwinkel der Sendestrahlachsen. Auf diese Weise kann ein Überlapp zwischen den Sichtfeldern der drei Sende- und Empfangseinrichtungen verringert werden.

Ferner wird die Aufgabe erfindungsgemäß bei der Fahrerassistenzeinrichtung dadurch gelöst, dass wenigstens eine Sende- und Empfangseinrichtung mit wenigstens einer Schwenkeinrichtung bezüglich einer Sendestrahlachse ihres Sendestrahlengangs um eine gedachte Schwenkachse schwenkbar verbunden ist zum Abtasten eines Sichtfeldes mit den Sendestrahlen.

Außerdem wird die Aufgabe erfindungsgemäß bei dem Fahrzeug dadurch gelöst, dass wenigstens eine Sende- und Empfangseinrichtung mit wenigstens einer Schwenkeinrichtung bezüglich einer Sendestrahlachse ihres Sendestrahlengangs um eine gedachte Schwenkachse schwenkbar verbunden ist zum Abtasten eines Sichtfeldes mit den Sendestrahlen.

Im Übrigen gelten die im Zusammenhang mit der erfindungsgemäßen optischen Messvorrichtung, der erfindungsgemäßen Fahrerassistenzeinrichtung und dem erfindungsgemäßen Fahrzeug und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

### Es zeigen schematisch

- Figur 1: ein Kraftfahrzeug mit einer Fahrerassistenzeinrichtung, aufweisend einen Laserscanner mit einer Sende- und Empfangseinrichtung gemäß einem ersten Ausführungsbeispiel;
- Figur 2: den Laserscanner der Fahrerassistenzeinrichtung des Kraftfahrzeugs aus der Figur 1;
- Figur 3: die Fahrerassistenzeinrichtung des Kraftfahrzeugs aus der Figur 1, wobei sich die Sende- und Empfangseinrichtung des Laserscanners in einer mittleren Schwenkstellung befindet;
- Figur 4: den Laserscanner aus der Figur 3 mit der Sende- und Empfangseinrichtung in einer ersten maximalen Schwenkauslenkung;
- Figur 5: den Laserscanner aus den Figuren 3 und 4 mit der Sende- und Empfangseinrichtung in einer zweiten maximalen Schwenkauslenkung;
- Figur 6: einen Laserscanner gemäß dem zweiten Ausführungsbeispiel, welcher ähnlich ist zu dem Laserscanner aus den Figuren 1 bis 5, mit drei Sende- und Empfangseinrichtungen, die sich in einer mittleren Schwenkstellung befinden;
- Figur 7: den Laserscanner aus Figur 6, wobei sich die drei Sende- und Empfangseinrichtungen in einer ersten maximalen Schwenkstellung befinden.

In den Figuren sind gleiche Bauteile mit gleichen Bezugszeichen versehen.

### Ausführungsform(en) der Erfindung

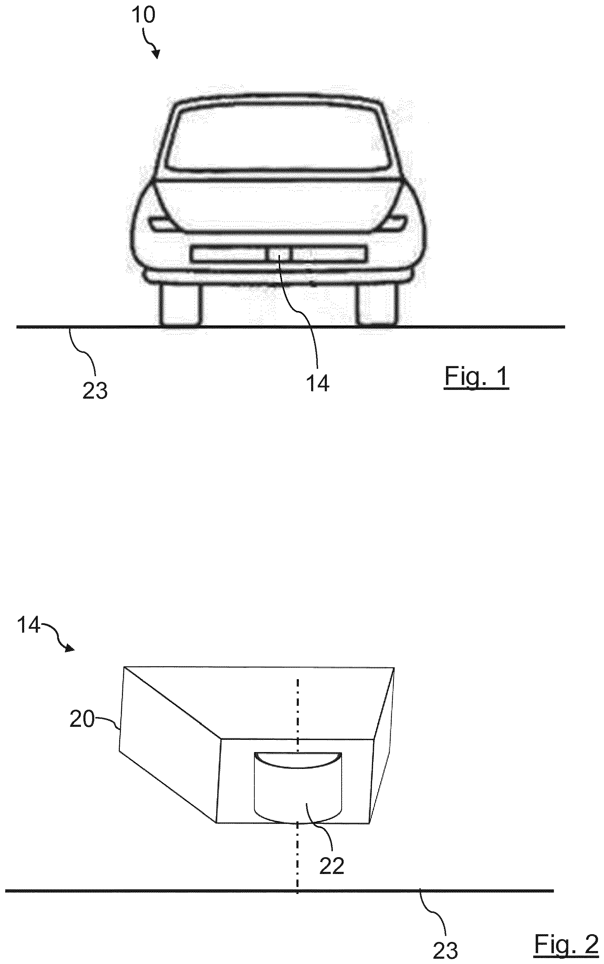

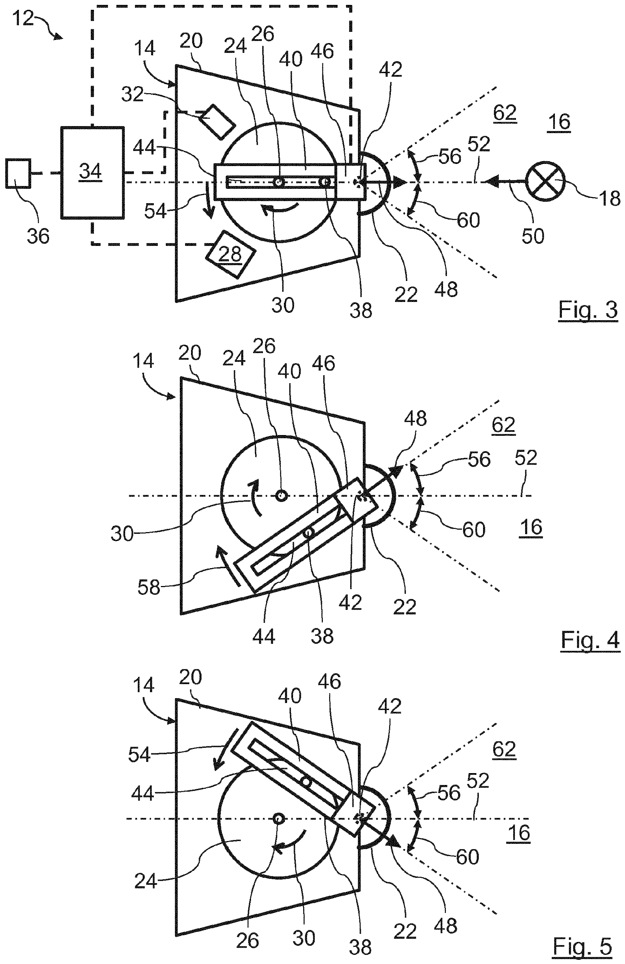

In der Figur 1 ist ein Kraftfahrzeug 10 in Form eines Personenkraftwagens gezeigt. Das Kraftfahrzeug 10 umfasst eine Fahrerassistenzeinrichtung 12, welche schematisch in der Figur 3 gezeigt ist. Die Fahrerassistenzeinrichtung 12 weist eine optische Messvorrichtung in Form eines Laserscanners 14 auf. Der Laserscanner 14 kann, wie in der Figur 1 beispielhaft gezeigt, in einem Kühlergrill des Kraftfahrzeugs 10 angeordnet sein. Der Laserscanner 14 ist in der Figur 2 isometrisch und in den Figuren 3 bis 5 im Schnitt in unterschiedlichen Betriebsphasen gezeigt. Mit dem Laserscanner 14 kann ein in den Figuren 3 bis 5 angedeuteter Überwachungsbereich 16 vor einer Front des Kraftfahrzeugs 10 auf Objekte oder Hindernisse hin überwacht werden. In der Figur 3 ist beispielhaft ein Objekt 18 angedeutet.

Der Laserscanner 14 verfügt über ein etwa keilförmiges Gehäuse 20 mit einem trapezförmigen Grundriss. An seiner schmalen Seite weist das Gehäuse 20 ein Fenster 22 auf. Das Fenster 22 zeigt zu dem Überwachungsbereich 16. Das Fenster 22 hat etwa die Form eines Mantels eines halben Kreiszylinders. Eine gedachte, in der Figur 2 gestrichelt angedeutete Achse des Kreiszylinders ist in der normalen Einbauposition senkrecht zu einer Fahrebene 23 des Kraftfahrzeugs 10 ausgerichtet.

Der Laserscanner 14 wird im Folgenden anhand der Figuren 3 bis 5 näher erläutert.

In dem Gehäuse 20 ist eine beispielhaft als Codierscheibe ausgebildete runde Antriebsscheibe 24 angeordnet. Die Antriebsscheibe 24 ist in ihrer Mitte bezüglich einer gehäusefesten Drehachse 26 drehbar gelagert. Die Antriebsscheibe 24 kann mit einem in der Figur 3 lediglich schematisch angedeuteten Antriebsmotor 28 in einer Drehrichtung 30 angetrieben werden. Eine Drehposition der Antriebsscheibe 24 relativ zum Gehäuse 20 kann mittels einer ebenfalls lediglich angedeuteten Winkelmesseinrichtung 32 erfasst werden.

Der Antriebsmotor 28 und die Winkelmesseinrichtung 32 sind mit jeweilige Signal-/Versorgungsleitungen, welche in der Figur 3 jeweils gestrichelt angedeutet sind, mit einem Steuergerät 34 der Fahrerassistenzeinrichtung 12 verbunden. Das Steuergerät 34 seinerseits ist mit Funktionssystemen des Kraftfahrzeugs, beispielsweise einer Lenkungssteuerung, einer Motorsteuerung und einem Bremssystem, ebenfalls mittels entsprechenden Signal- und Versorgungsleitungen verbunden. Beispielhaft ist in der Figur 3 eines der Funktionssysteme 36 angedeutet.

Auf der Antriebsscheibe 24 ist exzentrisch ein Antriebselement 38 befestigt. Das Antriebselement 38 hat etwa die Form eines Kreiszylinders, dessen Achse (Elementachse) parallel zur Drehachse 26 verläuft.

Des Weiteren weist der Laserscanner 14 einen Schwenkarm 40 auf. Der Schwenkarm 40 ist im Bereich eines seiner Enden außerhalb der Antriebsscheibe 24 um eine gehäusefeste Schwenkachse 42 schwenkbar gelagert. Die Schwenkachse 42 verläuft parallel zur Drehachse 26. Beispielhaft kann die Schwenkachse 42 mit der Achse des oben erwähnten Kreiszylinders des Fensters 22 zusammenfallen. Der Schwenkarm 40 ist in der normalen Betriebsorientierung des Laserscanners 14 in einer Ebene schwenkbar, welche parallel zur Fahrebene 23, in denen Figuren 3 bis 5 parallel zur Zeichenebene, verläuft.

In dem gezeigten Ausführungsbeispiel ist die Länge des Schwenkarms 40 größer als ein Durchmesser der Antriebsscheibe 24, sodass der Schwenkarm 40 in seiner in Figur 3 gezeigten Mittelposition die Antriebsscheibe 24 auf gegenüberliegenden Umfangsseiten überragt.

Der Schwenkarm 40 verfügt über eine Führungseinrichtung in Form eines länglichen Führungsschlitzes 44. Der Führungsschlitz 44 erstreckt sich entlang der Längsachse der Schwenkarms 40. In den Führungsschlitz 44 ragt das Antriebselement 38 der Antriebsscheibe 24. Das Antriebselement 23 ist dabei innerhalb des Führungsschlitzes 44 in Längsrichtung des Schwenkarms 40 verschiebbar und relativ zu dem Schwenkarm 40 drehbar. In Querrichtung des Schwenkarms 40 ist das Antriebselement 38 beidseitig geführt. Der Führungsschlitz 44 dient der Führung des Antriebselements 38 beim Drehen der Antriebsscheibe 24 und dem dadurch erzwungenen Schwenken des Schwenkarms 40 um die Schwenkachse 42.

Im Bereich eines Endes des Schwenkarms 40, an dem sich die Schwenkachse 42 befindet, ist an dem Schwenkarm 40 eine optische Sende- und Empfangseinrichtung 46 befestigt. Die Sende- und Empfangseinrichtung 46 ist über entsprechende Signalleitungen, welche in der Figur 3 gestrichelt angedeutet sind, mit dem Steuergerät 34 verbunden.

Die Sende- und Empfangseinrichtung 46 umfasst einen optischen Sender mit einem Laser. Mit dem Laser können gepulste Laserstrahlen erzeugt werden. Ein Sendestrahlengang der Laserstrahlen aus der Sende- und Empfangseinrichtung 46 heraus verläuft entlang einer gedachten Sendestrahlachse 48. In den Figuren 3 bis 5 ist die Sendestrahlachse 48 durch einen Pfeil angedeutet. Die Sendestrahlen werden durch das Fenster 22 hindurch in den Überwachungsbereich 16 gesendet. In der Mittelstellung, die in der Figur 3 gezeigt ist, verläuft die Sendestrahlachse 48 axial zu einer gedachten gehäusefesten Scannerachse 52 des Laserscanners 14. Beispielhaft befindet sich das in der Figur 3 gezeigte Objekt 18 in Verlängerung der Scannerachse 52 in dem Überwachungsbereich 16.

Ferner verfügt die Sende- und Empfangseinrichtung 46 über einen optischen Empfänger, der relativ zu dem Sender fest justiert so angeordnet ist, dass er von dem Sender abgestrahlte Sendestrahlen, die von einem in dem Strahlengang des Senders vorhandenen Objekt 18 zurückgestrahlt werden, empfangen kann. Die von dem Objekt 18 zurückgestrahlten Strahlen können als Empfangsstrahlen bezeichnet werden und sind in der Figur 3 durch einen Pfeil 50 angedeutet. Der Empfänger kann beispielhaft einen Fotodiodendetektor, bevorzugt einen Avalanche Fotodiodendetektor (APD), aufweisen. Es kann auch eine Matrix oder ein Array mit mehreren Detektoren verwendet werden.

Von dem Empfänger werden gepulste reflektierte Laserstrahlen empfangen, die in Reaktion auf die ausgesendeten gepulsten Laserstrahlen von dem Objekt 18 oder einem anderen Hindernis reflektiert werden. Das Ausgangssignal des optischen Empfängers wird beispielsweise mit einer entsprechenden Elektronik zur Ermittlung der Laufzeit der Laserstrahlen ausgewertet, um die Entfernung zu dem Objekt 18 in dem Überwachungsbereich 16 zu ermitteln. Die Entfernung kann dann über die entsprechende Signalleitung an das Steuergerät 34 übermittelt und zur Steuerung der Funktionssysteme 36 verwendet werden.

Durch das Drehen der Antriebsscheibe 24 in Drehrichtung 30 wird das Antriebselement 38 entsprechend um die Drehachse 26 kreisend angetrieben. Dabei wird durch die Zwangsführung des Antriebselements 38 in dem Führungsschlitz 44 der Schwenkarm 40 ausgehend von der in der Figur 3 gezeigten Mittelposition in einer ersten Schwenkrichtung 54 um die Schwenkachse 42 geschwenkt.

Durch das Schwenken des Schwenkarms 40 wird die Sende-Empfangseinrichtung 46 und damit die Sendestrahlachse 48 ebenfalls um die Schwenkachse 42 geschwenkt. In einer ersten Maximalauslenkung, welche in der Figur 4 gezeigt ist, ist die Sendestrahlachse 48 um einen ersten maximalen Schwenkwinkel 56 gegenüber der Scannerachse 52 geschwenkt. Beispielhaft beträgt der erste Schwenkwinkel 56 etwa 35°. Es können auch größere oder kleinere Schwenkwinkel vorgesehen sein.

Der erste Schwenkwinkel 56 ist vorgegeben durch den Abstand zwischen der Drehachse 26 und der Elementachse des Antriebselements 38 einerseits und dem Abstand zwischen der Drehachse 26 und der Schwenkachse 42 andererseits.

Beim weiteren Drehen der Antriebsscheibe 34 wird der Schwenkarm 40 in entgegengesetzte Schwenkrichtung 58 zurückgeschwenkt, über die Mittelposition hinweg in eine zweite Maximalauslenkung, welche in der Figur 5 gezeigt ist. In der zweiten Maximalauslenkung ist die Sendestrahlachse 48 um einen zweiten Schwenkwinkel 60 gegenüber der Scannerachse 52 geschwenkt. In dem Ausführungsbeispiel entspricht aufgrund des Aufbaus zwangsläufig der zweite Schwenkwinkel 60 betragsmäßig dem ersten Schwenkwinkel 56.

Die beiden Maximalauslenkungen der Sendestrahlachse 48 definieren ein Sichtfeld 62 des Laserscanners 14. Insgesamt hat das Sichtfeld 62 einen Öffnungswinkel, welcher der Summe der beiden Schwenkwinkel 56 und 60 entspricht. Bei dem gezeigten Ausführungsbeispiel sind das demnach etwa 70°.

Durch kontinuierliches Drehen der Antriebsscheibe 24 wird die Sendestrahlachse 48 zwischen den Maximalauslenkungen hin und her geschwenkt und so der Überwachungsbereich 16 innerhalb des Sichtfeldes 62 mit dem Sendestrahl abgetastet.

Um eine Höhe des Sichtfeldes 62 in Richtung axial zu der Schwenkachse 42 zu vergrößern, können bei einer anderen, nicht gezeigten, Ausgestaltung mehrere Sende- und Empfangseinrichtungen 46 übereinander angeordnet sein.

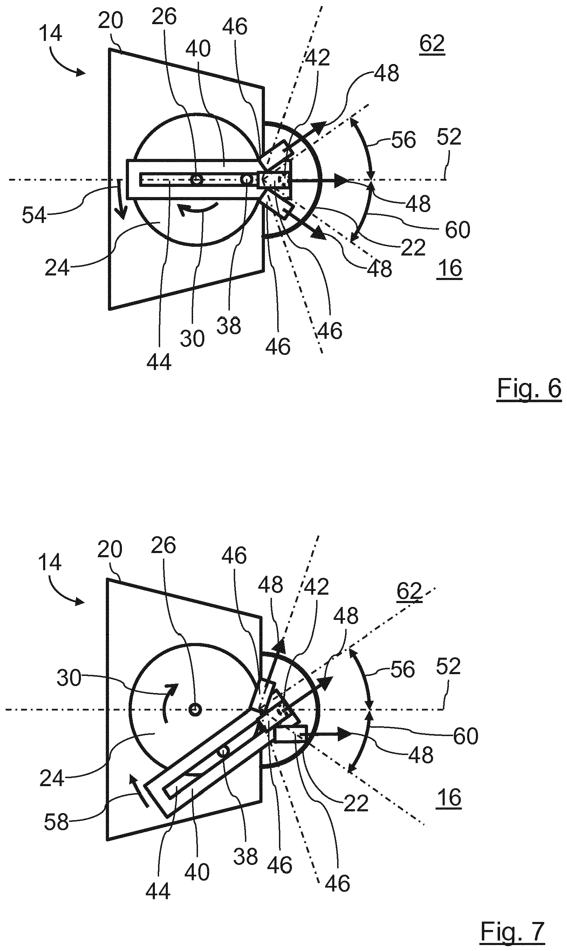

In den Figuren 6 und 7 ist ein zweites Ausführungsbeispiel eines Laserscanners 14 gezeigt. Diejenigen Elemente, die zu denen des ersten Ausführungsbeispiels aus den Figuren 3 bis 5 ähnlich sind, sind mit denselben Bezugszeichen versehen. Das zweite Ausführungsbeispiel unterscheidet sich von dem ersten Ausführungsbeispiel dadurch, dass beim zweiten Ausführungsbeispiel der Laserscanner 14 drei im Aufbau identische Sende- und Empfangseinrichtungen 46 aufweist.

Die Sende- und Empfangseinrichtungen 46 sind nebeneinander auf gleicher Höhe bezüglich einer Ebene senkrecht zur Schwenkachse 42 angeordnet. Die Sendestrahlachse 48 der mittleren Sende- und Empfangseinrichtung 46 zeigt wie bei dem ersten Ausführungsbeispiel in den Figuren 3 bis 5 in Richtung der Längsrichtung des Schwenkarms 40. Die Sendestrahlachsen 48 der beiden äußeren Sende- und Empfangseinrichtungen 46 sind gegenüber der Sendestrahlachse 48 der mittleren Sende- und Empfangseinrichtung 46 jeweils beispielhaft um 35° in entgegengesetzte Richtungen geneigt. Eine durch die drei Sendestrahlachse 48 auf gespannte Ebene verläuft beispielhaft senkrecht zur Schwenkachse 42. Die äußeren Grenzen des gesamten Sichtfeldes 62 des Laserscanners 14 werden die jeweils äußeren Maximalauslenkungen der beiden äußeren Sende- und Empfangseinrichtung 46 definiert.

Gegenüber dem ersten Ausführungsbeispiel wird der Öffnungswinkel des gesamten Sichtfeldes 62 des Laserscanners 14, welcher dort alleine durch die Summe des ersten Schwenkwinkels 56 und des zweiten Schwenkwinkels 60 definiert wird, beim zweiten Ausführungsbeispiel um die jeweiligen Neigungswinkel der Sendestrahlachse 48 der beiden äußeren Sende- und Empfangseinrichtung 46 gegenüber der Sendestrahlachse 48 der mittleren Sende- und Empfangseinrichtung 46, also um zweimal 35°, vergrößert. Der gesamte Öffnungswinkel des Sichtfeldes 62 beträgt beim zweiten Ausführungsbeispiel entsprechend etwa 140°.

## Patentansprüche

1. Optische Messvorrichtung (14) eines Fahrzeugs (10), mit wenigstens einer Sende-und Empfangseinrichtung (46) aufweisend wenigstens einen optischen Sender und wenigstens einen optischen Empfänger, welche relativ zueinander so angeordnet sind, dass der wenigstens eine optische Empfänger von dem wenigstens einen Sender ausgestrahlte Sendestrahlen, die von einem in einem Sendestrahlengang des wenigstens einen Senders gegebenenfalls vorhandenen Objekt (18) oder Hindernis zurückgestrahlt werden, empfangen kann, **dadurch gekennzeichnet, dass** wenigstens eine Sende- und Empfangseinrichtung (46) mit wenigstens einer Schwenkeinrichtung (24, 26, 38, 40, 42, 44) bezüglich einer Sendestrahlachse (48) ihres Sendestrahlengangs um eine gedachte Schwenkachse (42) schwenkbar verbunden ist zum Abtasten eines Sichtfeldes (62) mit den Sendestrahlen.

2. Optische Messvorrichtung nach Anspruch 1, **dadurch gekennzeichnet, dass** der wenigstens eine Sender und der wenigstens eine Empfänger wenigstens einer Sende- und Empfangseinrichtung (46) relativ zueinander fest justiert sind.

3. Optische Messvorrichtung nach Anspruch 1 oder 2, **dadurch gekennzeichnet, dass** die Schwenkeinrichtung (24, 26, 38, 40, 42, 44) wenigstens eine motorische Antriebseinrichtung (28) aufweist oder mit dieser angetrieben ist zum insbesondere zyklischen Hin-und-her-Schwenken wenigstens einer Sende- und Empfangseinrichtung (46) zwischen zwei Maximalauslenkungen ihrer Sendestrahlachse (48).

4. Optische Messvorrichtung nach einem der vorigen Ansprüche, **dadurch gekennzeichnet, dass** wenigstens eine Sende- und Empfangseinrichtung (46) fest mit einem Schwenkarm (40) verbunden ist, der um die Schwenkachse (42) schwenkbar ist.

5. Optische Messvorrichtung nach einem der vorigen Ansprüche, **dadurch gekennzeichnet, dass** wenigstens eine Schwenkeinrichtung (24, 26, 38, 40, 42, 44) ein Antriebselement (38) aufweist, welches um eine gedachte relativ zur Schwenkachse (42) fixe Drehachse (26) kreisen kann und welches entlang des Schwenkarms (40) verschiebbar an diesem mittels einer Führungseinrichtung (44) geführt ist.

6. Optische Messvorrichtung nach Anspruch 5, **dadurch gekennzeichnet, dass** das Antriebselement (38) an einem Antriebsarm oder einer Antriebsscheibe (24) angeordnet ist, welche(r) um die Drehachse (26) rotierend antreibbar ist.

7. Optische Messvorrichtung nach einem der vorigen Ansprüche, **dadurch gekennzeichnet, dass** die Messvorrichtung (14) wenigstens eine Auslenkungsbestimmungseinrichtung (32) aufweist, mit der wenigstens eine Größe (56, 60), die einen Schwenkzustand der wenigstens einen Sende- und Empfangseinrichtung (46) charakterisieren kann, insbesondere ein Maß für eine Auslenkung und/oder eine Schwenkfrequenz und/oder einer Schwenkgeschwindigkeit der wenigstens einen Sende- und Empfangseinrichtung (46), ermittelt werden kann.

8. Optische Messvorrichtung nach einem der vorigen Ansprüche, **dadurch gekennzeichnet, dass** mehrere Sende- und Empfangseinrichtungen (46) mit derselben Schwenkeinrichtung (24, 26, 38, 40, 42, 44) um eine Schwenkachse (42) gemeinsam schwenkbar verbunden sind.

9. Optische Messvorrichtung nach wenigstens einem der vorigen Ansprüche, **dadurch gekennzeichnet, dass** jeweilige Sendestrahlachsen (48) von wenigstens zwei Sende- und Empfangseinrichtungen (46) der Messvorrichtung (14) zueinander geneigt sind.

10. Fahrerassistenzeinrichtung (12) eines Fahrzeugs (10) mit wenigstens einer optischen Messvorrichtung (14), wobei die optische Messvorrichtung (14) wenigstens eine Sende- und Empfangseinrichtung (46) umfasst, die wenigstens einen optischen Sender und wenigstens einen optischen Empfänger aufweist, welche relativ zueinander so angeordnet sind, dass der wenigstens eine optische Empfänger von dem wenigstens einen Sender ausgestrahlte Sendestrahlen, die von einem in einem Sendestrahlengang des wenigstens einen Senders gegebenenfalls vorhandenen Objekt (18) oder Hindernis zurückgestrahlt werden, empfangen kann, **dadurch gekennzeichnet, dass** wenigstens eine Sende- und Empfangseinrichtung (46) mit wenigstens einer Schwenkeinrichtung (24, 26, 38, 40, 42, 44) bezüglich der Sendestrahlachse (48) ihres Sendestrahlengangs um eine gedachte Schwenkachse (42) schwenkbar verbunden ist zum Abtasten eines Sichtfeldes (62) mit den Sendestrahlen.

11. Fahrzeug (10) mit wenigstens einer optischen Messvorrichtung (14), insbesondere einer Fahrerassistenzeinrichtung (12), wobei die optische Messvorrichtung (14) wenigstens eine Sende- und Empfangseinrichtung (46) umfasst, die wenigstens einen optischen Sender und wenigstens einen optischen Empfänger aufweist, welche relativ zueinander so angeordnet sind, dass der wenigstens eine optische Empfänger von dem wenigstens einen Sender ausgestrahlte Sendestrahlen, die von einem in einem Sendestrahlengang des wenigstens einen Senders gegebenenfalls vorhandenen Objekt (18) oder Hindernis zurückgestrahlt werden, empfangen kann, **dadurch gekennzeichnet, dass** wenigstens eine Sende- und Empfangseinrichtung (46) mit wenigstens einer Schwenkeinrichtung (24, 26, 38, 40, 42, 44) bezüglich der Sendestrahlachse (48) ihres Sendestrahlengangs um eine gedachte Schwenkachse (42) schwenkbar verbunden ist zum Abtasten eines Sichtfeldes (62) mit den Sendestrahlen.
